# EUROPEAN PATENT APPLICATION

(11) **EP 4 756 591 A1**
(43) Date of publication of application: **10.06.2026**
(21) Application number: 25197007.5
(22) Date of filing: 20.08.2025
(51) Int. Cl.: G06F 3/04817, G06F 8/65, G06F 9/451

(54) **METHOD, APPARATUS, DEVICE AND STORAGE MEDIUM FOR APPLICATION INTERACTION**

(30) Priority: 04.12.2024 CN 202411773886
(71) Applicant: Beijing Zitiao Network Technology Co., Ltd., Beijing 100190 (CN)
(72) Inventor: Jin, Siyao, Beijing, 100028 (CN)
(74) Representative: Grünecker Patent- und Rechtsanwälte PartG mbB

(57) **Abstract**

Embodiments of the disclosure relate to a method, an apparatus, a device, and a storage medium for application interaction. The method proposed herein includes: receiving an operation of a user logging in a target application; determining a target identification material from a set of identification materials at a terminal device, the target identification material being determined based on reference information associated with the user; and updating an image identification of the target application by using the target identification material.

## Description

### FIELD

Example embodiments of the present disclosure generally relate to the field of computers, and in particular, to a method, an apparatus, a device, and a computer-readable storage medium for application interaction.

### BACKGROUND

With the development of computer technologies, the Internet has become an important platform for people to exchange information. In the process of information exchange over the Internet, people expect to view more recommended content during the process of exchange. For example, a user may view corresponding recommended content based on an image identification of a target application.

### SUMMARY

In a first aspect of the present disclosure, a method for application interaction is provided. The method includes: receiving an operation of a user logging in a target application; determining a target identification material from a set of identification materials at a terminal device, the target identification material being determined based on reference information associated with the user; and updating an image identification of the target application by using the target identification material.

In a second aspect of the present disclosure, an apparatus for application interaction is provided. The apparatus includes: an operation receiving module configured to receive an operation of a user logging in a target application; a material determination module configured to determine a target identification material from a set of identification materials at a terminal device, the target identification material being determined based on reference information associated with the user; and an identification update module configured to update an image identification of the target application by using the target identification material.

In a third aspect of the present disclosure, an electronic device is provided. The device includes at least one processing unit; and at least one memory coupled to the at least one processing unit and storing instructions executable by the at least one processing unit, the instructions, when executed by the at least one processing unit, causing the device to perform the method of the first aspect.

In a fourth aspect of the present disclosure, a computer-readable storage medium is provided. The computer-readable storage medium has a computer program stored thereon, the computer program is executable by a processor to perform the method of the first aspect.

It would be appreciated that the content described in this summary section is neither intended to identify key or essential features of embodiments of the present disclosure, nor is it intended to limit the scope of the present disclosure. Other features of the present disclosure will be readily envisaged through the following description.

### BRIEF DESCRIPTION OF THE DRAWINGS

The above and other features, advantages and aspects of embodiments of the present disclosure will become more apparent in combination with the drawings and with reference to the following detailed description. In the drawings, the same or similar reference numbers refer to the same or similar elements, where:
Fig. 1 shows a schematic diagram of an example environment in which embodiments according to the present disclosure may be implemented;
Fig. 2 shows a flowchart of an example process of application interaction according to some embodiments of the present disclosure;
Fig. 3 shows an example interface according to some embodiments of the present disclosure;
Fig. 4 shows a schematic structural block diagram of an example apparatus for application interaction according to some embodiments of the present disclosure; and
Fig. 5 shows a block diagram of an electronic device capable of implementing multiple embodiments of the present disclosure.

### DETAILED DESCRIPTION OF EMBODIMENTS

Embodiments of the present disclosure are described in more detail hereinafter with reference to the drawings. The drawings illustrate some embodiments of the present disclosure, but it would be appreciated that the present disclosure may be implemented in various manners and should not be construed as limited to the embodiments set forth herein. On the contrary, these embodiments are provided for more thorough and complete understanding of the present disclosure. It would be appreciated that the drawings and embodiments of the present disclosure are only for illustrative purposes and are not intended to limit the scope of protection of the present disclosure.

It would be noted that any section/sub-section headings provided herein are not limiting. Various embodiments are described throughout this document, and any type of embodiments may be included under any section/subsection. Additionally, embodiments described in any section/sub-section may be combined with any other embodiments described in the same section/sub-section and/or different section/sub-section in any manner.

In the description of the embodiments of the present disclosure, the term "include/comprise" and like terms are to be construed as open terms that mean "include/comprise but not limited to". The term "based on" is to be construed as "based at least in part on". The term "one embodiment" or "the embodiment" is to be construed as "at least one embodiment". The term "some embodiments" is to be construed as "at least some embodiments". Other definitions, either explicit or implicit, may be included below. The terms "first", "second", and the like may refer to different or same objects. Other definitions, either explicit or implicit, may be included below.

Embodiments of the present disclosure may involve user data, data acquisition, and/or data use. These aspects comply with corresponding laws, regulations, and related provisions. In the embodiments of the present disclosure, all data collection, acquisition, processing, machining, forwarding, use, etc. are performed on the premise that the user is aware of and confirms. Accordingly, when implementing embodiments of the present disclosure, the user should be informed of the type, range of use, use scenarios, etc. of the data or information that may be involved and the authorization of the user should be obtained in an appropriate manner in accordance with relevant laws and regulations. The specific manner of informing and/or authorizing may vary according to the actual situation and application scenarios, and the scope of the present disclosure is not limited in this regard.

If the solutions in this specification and the embodiments involve personal information processing, the processing is performed on the premise that there is a legal basis (for example, the consent of the personal information subject is obtained, or it is necessary to perform a contract, etc.), and the processing is only performed within the scope of provisions or agreements. If the user refuses to process personal information other than the necessary information required for the basic functions, it will not affect the user's use of the basic functions.

According to a conventional solution, an image identification related to a target application only has some simple content recommendation display, which affects user experience.

An embodiment of the present disclosure provides a solution for application interaction. According to the solution, it is possible to receive an operation of a user logging in a target application; determine a target identification material from a set of identification materials at a terminal device, the target identification material being determined based on reference information associated with the user; and update an image identification of the target application by using the target identification material.

In this manner, embodiments of the present disclosure are capable of providing richer identification materials associated with the reference information of the user, and may support updating the image identification of the target application based on the target identification material, thereby improving efficiency for obtaining information.

Various example implementations of the solution are described in detail below in further conjunction with the drawings.

### EXAMPLE ENVIRONMENT

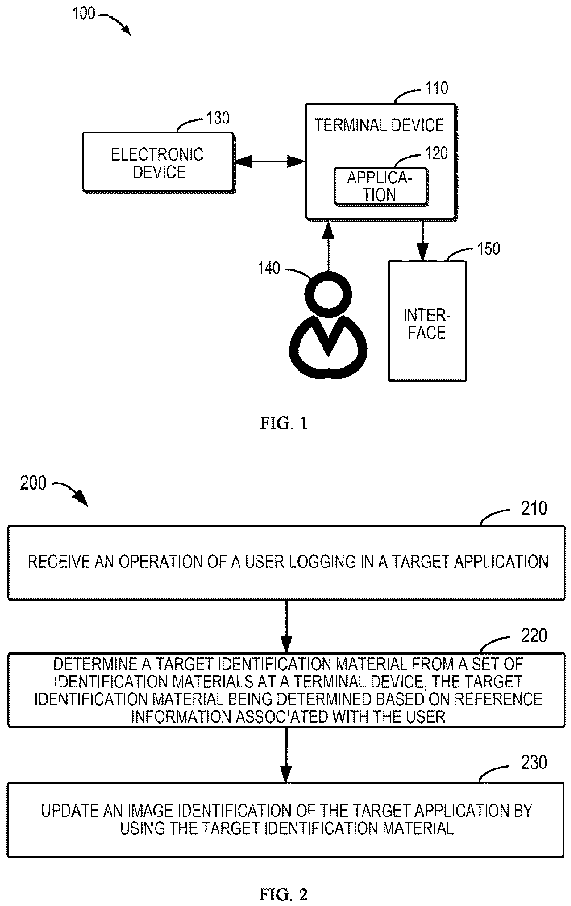

Fig. 1 shows a schematic diagram of an example environment 100 in which the embodiments of the present disclosure may be implemented. As shown in Fig. 1, the example environment 100 may include a terminal device 110 and an electronic device 130.

In the example environment 100, the terminal device 110 may run an application 120 supporting interface interaction. The application 120 may be any suitable type of application for interface interaction, examples of which may include, but are not limited to, a music application, a video application, a social application, or other suitable applications. A user 140 may interact with the application 120 via the terminal device 110 and/or its attached devices.

In the environment 100 of Fig. 1, if the application 120 is active, the terminal device 110 may present an interface 150 for supporting the interface interaction through the application 120.

In some embodiments, the terminal device 110 may communicate with the electronic device 130 (or a server) to implement the provision of services for the application 120. The terminal device 110 may be any type of mobile terminal, fixed terminal, or portable terminal, including a mobile phone, a desktop computer, a laptop computer, a notebook computer, a netbook computer, a tablet computer, a media computer, a multimedia tablet, a palmtop computer, a portable game terminal, a VR/AR device, a personal communication system (PCS) device, a personal navigation device, a personal digital assistant (PDA), an audio/video player, a digital camera/video camera, a positioning device, a television receiver, a radio broadcast receiver, an e-book device, a game device, or any combination of the foregoing, including accessories and peripherals of these devices or any combination thereof. In some embodiments, the terminal device 110 may also support any type of user-specific interface (such as "wearable" circuitry, etc.).

The electronic device 130 may be an independent physical server, a server cluster or distributed system composed of multiple physical servers, or a cloud server that provides basic cloud computing services such as cloud services, cloud databases, cloud computing, cloud functions, cloud storage, network services, cloud communications, middleware services, domain name services, security services, content delivery networks, and big data and artificial intelligence platforms. The electronic device 130 may include, for example, a computing system/server, such as a mainframe, an edge computing node, a computing device in a cloud environment, and the like. The electronic device 130 may provide background services for the application 120 supporting content presentation in the terminal device 110.

A communication connection may be established between the electronic device 130 and the terminal device 110. The communication connection may be established by wired or wireless means. The communication connection may include, but is not limited to, a Bluetooth connection, a mobile network connection, a universal serial bus (USB) connection, a wireless fidelity (WiFi) connection, etc., and the embodiments of the present disclosure are not limited in this regard. In the embodiments of the present disclosure, the electronic device 130 and the terminal device 110 may implement signaling interaction through the communication connection therebetween.

It would be appreciated that the structure and functions of the elements in the environment 100 are described for illustrative purposes only, without suggesting any limitation to the scope of the present disclosure.

Some example embodiments of the present disclosure are described below with continued reference to the drawings.

### Example Process

Fig. 2 shows a flowchart of an example process 200 of application interaction according to some embodiments of the present disclosure. The process 200 may be implemented at the terminal device 110. The process 200 is described below with reference to Fig. 1.

As shown in Fig. 2, at block 210, the terminal device 110 receives an operation of a user logging in a target application.

In some embodiments, the terminal device 110 may be loaded with the target application, and such a target application may be, for example, an application related to music, video, transportation, shopping, or the like. The present disclosure is not intended to limit the type of the target application. Further, the terminal device 110 may receive the operation of the user logging in the target application based on behaviors such as login information input by the user and authorization for the target application. In some other embodiments, the user may also log in to the target application based on a browser.

For ease of understanding, a music application is taken as an example in the following description, and the following description is made in a state that the user authorization is obtained.

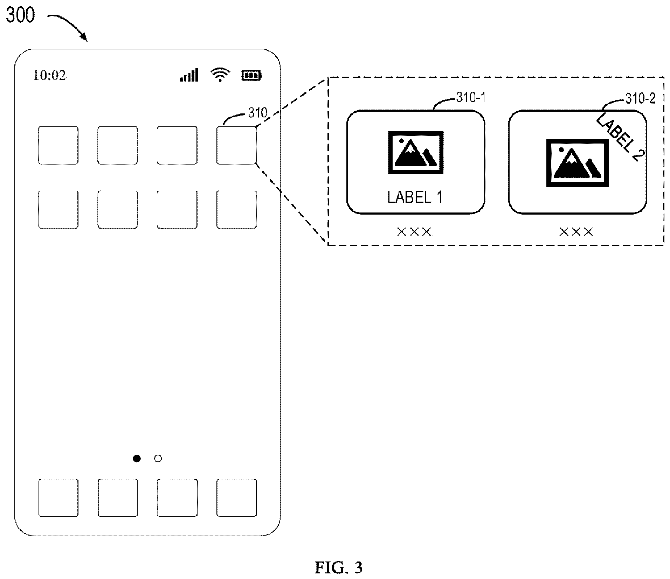

The present disclosure is described below with reference to Fig. 3. Fig. 3 shows an example interface 300 according to some embodiments of the present disclosure. The interface 300 may be provided by the terminal device 110 shown in Fig. 1.

In some embodiments, such an interface 300 may be, for example, a desktop interface (for example, a mobile phone screen) of a smart terminal. Further, taking the terminal device 110 loaded with the target application as an example, the terminal device 110 may present an image identification 310 associated with the target application in the interface 300, and such an image identification 310 may be a desktop icon of the target application. In some embodiments, such an image identification 310 may display different content, such as an image identification 310-1 and an image identification 310-2.

In some embodiments, such an image identification 310 may have, for example, a substantially square shape. Alternatively, it may also have any other suitable layout, such as a rectangle, a circle, an ellipse, etc. In some embodiments, the target application may provide image identification styles corresponding to different sizes and/or shapes, and further, such image identification styles may be selected by the user and moved to any suitable position in the system desktop.

The process of determining the content and style of the image identification 310 is described below.

Returning to Fig. 2, at block 220, the terminal device 110 determines a target identification material from a set of identification materials at the terminal device, the target identification material being determined based on reference information associated with the user.

In some embodiments, the set of identification materials may be a predetermined set of identification materials, and such a set of identification materials may include, for example, identification materials for different types of users, users in different periods, different time periods, and some important activities.

As an example, the identification materials for different types of users may be, for example, a set of predetermined identification materials for interest of different users in different virtual resources, such as listening to music for free, getting benefits for free, etc.

As an example, the identification materials for users in different periods may be, for example, a set of predetermined identification materials based on a duration that the user has logged in to the target application, such as getting benefits for free, listening to music for free, extremely nice to listen to, etc.

As an example, the identification materials for different time periods may be, for example, a set of predetermined identification materials based on suitable songs for different time periods, for example, some identification materials such as a travel song list and a return song list that are predetermined during holidays; some identification materials related to sleep-aiding songs that are predetermined at night; and some identification materials of fitness songs that are predetermined in a season suitable for exercising.

As an example, the identification materials for some important activities may be, for example, a set of predetermined identification materials when there are activities such as a large-scale activity, a popular program, and a premiere of a new song, for example, identification materials having an activity name, a program name, a song name, etc.

It would be appreciated that the above are only examples for illustration, and the present disclosure is not intended to limit the type of identification materials.

For ease of understanding, an example in which a new user gets benefits for free in the target application is used for illustration below.

In some embodiments, the terminal device 110 may use a server to determine whether the reference information associated with the user satisfies a preset condition, and such reference information may indicate content of benefits of the user in the target application. For example, such content of benefits may be specifically a remaining membership period of the target application.

Further, in response to determining that the reference information satisfies the preset condition, the server may generate a target message, and such a target message may indicate a theme and/or an identifier of the target identification material. In some embodiments, the semantic information expressed by the target identification material may be determined based on the reference information.

As an example, in response to determining that the remaining membership period of the current new user is greater than three days, the server may generate a target message of replacing a target application identification with an exclusive identification of a new user. As another example, in response to determining that the remaining membership period of the current new user is less than three days and that the current target application identification is the new user exclusive identification, the server may generate a target message of replacing the exclusive identification of a new user.

Further, the terminal device 110 may receive a target message associated with the target identification material from a server (or the electronic device 130) and determine the target identification material from the set of identification materials based on the target message. As an example, in response to receiving the target message of replacing the target application identification with the exclusive identification of a new user, the terminal device 110 may determine the target identification material from the previously determined set of identification materials, such as getting benefits for free.

Further, the terminal device 110 may determine, from the set of identification materials at the terminal device, the target identification material corresponding to the reference information associated with the user. As an example, in response to the current user being a new user, the terminal device 110 may take "getting benefits for free" as the target identification material.

In some other embodiments, such a target identification material may also be determined by the terminal device 110 directly based on historical interaction information between the user and the target application. As an example, the terminal device 110 may determine, based on information of historical song listening of the current user, that the number of times the current user browses a certain singer is greater than that of other singers, then when the singer releases a new album, the name of the album may be used as the target identification material.

In this manner, the terminal device 110 may obtain the target identification material for updating the image identification of the target application.

Returning to Fig. 2, at block 230, the terminal device 110 updates an image identification of the target application by using the target identification material.

It is convenient for the user to view the updated image identification of the target application and thus to know the content of benefits of the user in the target application more intuitively. In some embodiments, the target identification material may include image identification content, and such image identification content may be, for example, an image associated with benefits of the user, a large-scale activity, a popular program, a singer, or the like. Further, the terminal device 110 may replace the image identification of the target application with the image identification content based on the received target message.

As an example, in response to receiving the target message of replacing the target application identification with the exclusive identification of a new user, the terminal device 110 may determine the target identification material from the previously determined set of identification materials, such as image identification content of getting benefits for free. Further, the terminal device 110 may replace the original image identification of the target application with "getting benefits for free" displayed as an image.

In some other embodiments, the target identification material may include image identification content. Further, the terminal device 110 may adjust a style of an existing icon identification of the target application based on the target identification material, such that the updated icon identification presents the target identification material. As an example, the terminal device 110 may place the target identification material above the existing icon identification in a suitable size and position. As another example, the terminal device 110 may make the target identification material visually more obvious than the existing icon identification by increasing a size of the target identification material or reducing a size of the existing icon identification, so as to facilitate the user to view the content displayed by the updated icon identification.

In some other embodiments, the terminal device 110 may update, in response to receiving a closing request for the target application, the image identification of the target application with the target identification material. As an example, in response to receiving the target message of replacing the target application identification with the exclusive identification of a new user, the terminal device 110 may determine the target identification material from the previously determined set of identification materials, such as getting benefits for free. Further, in response to the user closing the target application, the terminal device 110 may present the target identification material of "getting benefits for free" on the target application.

In some other embodiments, the target identification material itself may also serve as a desktop icon of the target application. As an example, the terminal device 110 may also directly present the target identification material as the desktop icon of the target application.

In some embodiments, the update of the image identification of the target application may be independent of the version update of the target application. As an example, the terminal device 110 may determine the image identification of the target application to be updated the next time the user logs in based on the information of the user logging in the target application received this time.

In this manner, embodiments of the present disclosure are capable of providing richer identification materials associated with the reference information of the user, and may support updating the image identification of the target application based on the target identification material, thereby improving information access efficiency.

### Example Apparatus and Device

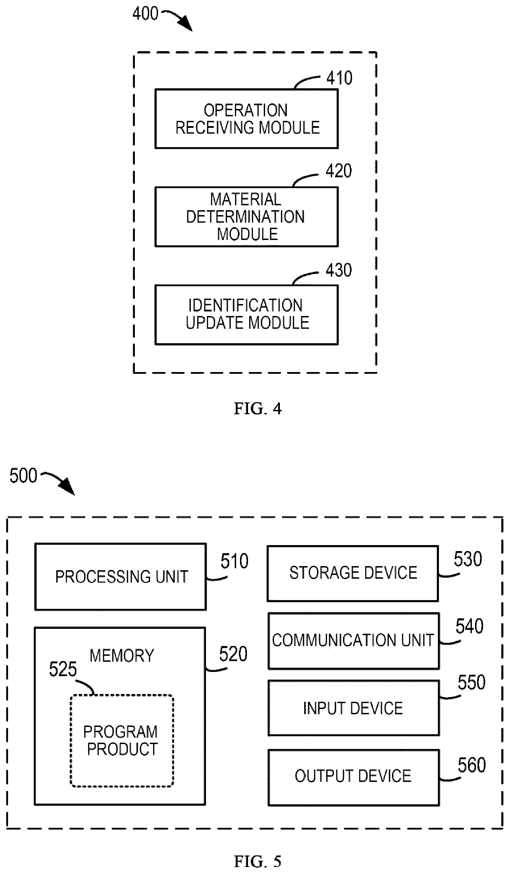

An embodiment of the present disclosure further provides a corresponding apparatus for implementing the method or process described above. Fig. 4 shows a schematic structural block diagram of an example apparatus 400 for application interaction according to some embodiments of the present disclosure. The apparatus 400 may be implemented as or included in the terminal device 110. Each module/component in the apparatus 400 may be implemented by hardware, software, firmware, or any combination thereof.

As shown in Fig. 4, the apparatus 400 includes an operation receiving module 410 configured to receive an operation of a user logging in a target application; a material determination module 420 configured to determine a target identification material from a set of identification materials at a terminal device, the target identification material being determined based on reference information associated with the user; and an identification update module 430 configured to update an image identification of the target application by using the target identification material.

In some embodiments, the material determination module 420 is further configured to receive a target message associated with the target identification material from a server; and determine, based on the target message, the target identification material from the set of identification materials.

In some embodiments, the target message is generated in response to the server determining that the reference information satisfies a preset condition, and the target identification material corresponds to the preset condition.

In some embodiments, the target message indicates a theme and/or an identification of the target identifier material.

In some embodiments, the target identification material includes image identification content, and the identification update module 430 is further configured to replace the image identification of the target application by using the image identification content.

In some embodiments, the target identification material includes image identification content, and the identification update module 430 is further configured to adjust, based on the target identification material, a style of an existing icon identification of the target application, such that the updated icon identification presents the target identification material.

In some embodiments, the identification update module 430 is further configured to update, in response to receiving a closing request of the target application and by using the target identification material, the image identification of the target application.

In some embodiments, the semantic information expressed by the target identification material is determined based on the reference information.

In some embodiments, the reference information indicates content of benefits of the user in the target application, and the target identification material is associated with the content of benefits.

In some embodiments, the update of the image identification of the target application is independent of the version update of the target application.

In some embodiments, the image identification of the target application is a desktop icon of the target application.

The modules included in the apparatus 400 may be implemented in various manners, including software, hardware, firmware, or any combination thereof. In some embodiments, one or more units may be implemented using software and/or firmware, for example machine executable instructions stored on a storage medium. In addition to machine executable instructions or as an alternative, some or all modules in the apparatus 400 may be implemented at least partially by one or more hardware logic components. As an example, rather than a limitation, example types of hardware logic components that may be used include field programmable gate array (FPGA), application specific integrated circuit (ASIC), application specific standard (ASSP), system on chip (SOC), complex programmable logic device (CPLD), and the like.

As shown in Fig. 5, the electronic device 500 is in the form of a general electronic device. The components of the electronic device 500 may include, but are not limited to, one or more processors or processing units 510, a memory 520, a storage device 530, one or more communication units 540, one or more input devices 550, and one or more output devices 560. The processing unit 510 may be an actual or virtual processor and may perform various processing based on the programs stored in the memory 520. In a multi-processor system, multiple processing units execute computer executable instructions in parallel to improve the parallel processing capability of the electronic device 500.

The electronic device 500 typically includes multiple computer storage medium. Such medium may be any available medium that is accessible to the electronic device 500, including, but not limited to, volatile and non-volatile medium, removable and non-removable medium. The memory 520 may be volatile memory (for example, a register, cache, a random access memory (RAM)), a non-volatile memory (such as a read-only memory (ROM), an electrically erasable programmable read-only memory (EEPROM), a flash memory), or any combination thereof. The storage device 530 may be removable or non-removable medium, and may include a machine readable medium, such as a flash drive, a disk, or any other medium, which may be used to store information and/or data and may be accessed within the electronic device 500.

The electronic device 500 may further include additional removable/non-removable, volatile/non-volatile memory medium. Although not shown in Fig. 5, a disk driver for reading from or writing to a removable, non-volatile disk (such as a "floppy disk") and an optical disk driver for reading from or writing to a removable, non-volatile optical disk may be provided. In these cases, each driver may be connected to the bus (not shown) by one or more data medium interfaces. The memory 520 may include a computer program product 525 having one or more program modules configured to perform various methods or acts of the various embodiments of the present disclosure.

The communication unit 540 enables communication with other electronic devices through the communication medium. Additionally, the functions of the components of the electronic device 500 may be implemented with a single computing cluster or multiple computing machines, which may communicate through communication connections. Therefore, the electronic device 500 may use a logical connection with one or more other servers, a network personal computer (PC) or another network node to operate in a networked environment.

The input device 550 may be one or more input devices, such as a mouse, a keyboard, a tracking ball, etc. The output device 560 may be one or more output devices, such as a display, a speaker, a printer, etc. The electronic device 500 may also communicate with one or more external devices (not shown) as needed through the communication unit 540, such as a storage device, a display device, etc., with one or more devices that enable the user to interact with the electronic device 500, or with any device that enables the electronic device 500 to communicate with one or more other electronic devices (such as a network card, a modem, etc.). Such communication may be performed via input/output (I/O) interfaces (not shown).

According to an illustrative implementation of the present disclosure, there is provided a computer-readable storage medium having computer executable instructions stored thereon, where the computer executable instructions are executed by a processor to implement the method described above. According to an illustrative implementation of the present disclosure, there is further provided a computer program product tangibly stored on a non-transitory computer-readable medium and including computer executable instructions, which are executed by a processor to implement the method described above.

Various aspects of the present disclosure are described herein with reference to flowcharts and/or block diagrams of methods, apparatuses, devices, and computer program products implemented according to the present disclosure. It would be appreciated that each block of the flowchart and/or block diagram, and combinations of blocks in the flowchart and/or block diagram, may be implemented by computer-readable program instructions.

These computer-readable program instructions may be provided to a processing unit of a general-purpose computer, a special-purpose computer, or other programmable data processing apparatus to produce a machine, such that the instructions, when executed by the processing unit of the computer or other programmable data processing apparatus, create means for implementing the functions/acts specified in one or more blocks of the flowchart and/or block diagram. These computer-readable program instructions may also be stored in a computer-readable storage medium, which instructions cause the computer, programmable data processing apparatus, and/or other devices to operate in a particular manner, such that the computer-readable medium storing the instructions includes an article of manufacture including instructions for implementing various aspects of the functions/acts specified in one or more blocks of the flowchart and/or block diagram.

The computer-readable program instructions may be loaded onto a computer, other programmable data processing apparatus, or other device to cause a series of operations and steps to be performed on the computer, other programmable data processing apparatus, or other device, to produce a computer-implemented process, such that the instructions executed on the computer, other programmable data processing apparatus, or other device implement the functions/acts specified in one or more blocks of the flowchart and/or block diagram.

The flowchart and block diagram in the drawings illustrate the possibly implemented architectures, functions, and operations of the system, method, and computer program product according to multiple implementations of the present disclosure. In this regard, each block in the flowchart or block diagram may represent a module, program segment, or portion of instructions, which module, program segment, or portion of instructions contains one or more executable instructions for implementing the specified logical functions. In some alternative implementations, the functions indicated in the blocks may occur in an order different from that indicated in the drawings. For example, two consecutive blocks may, in fact, be executed substantially concurrently, or the blocks may sometimes be executed in the reverse order, depending upon the functionality involved. It would also be noted that each block of the block diagram and/or flowchart, and combinations of blocks in the block diagram and/or flowchart, may be implemented in special purpose hardware-based systems that perform the specified functions or acts, or combinations of special purpose hardware and computer instructions.

The implementations of the present disclosure have been described above. The above description is illustrative, not exhaustive, and is not limited to the disclosed implementations. Many modifications and variations will be apparent to those of ordinary skill in the art without departing from the scope and spirit of the described implementations. The choice of terms used herein is intended to best explain the principles of the implementations, the practical applications, or improvements to the technology in the market, or to enable other persons of ordinary skill in the art to understand the implementations disclosed herein.

## Claims

1. A method (200) for application interaction performed by a terminal device (110), the method comprising:
receiving (210) an operation of a user logging in a target application;
determining (220) a target identification material from a set of identification materials at the terminal device (110), the target identification material being determined based on reference information associated with the user; and
updating (230) an image identification of the target application by using the target identification material.

2. The method (200) of claim 1, wherein determining the target identification material from the set of identification materials at the terminal device comprises:
receiving a target message associated with the target identification material from a server; and
determining, based on the target message, the target identification material from the set of identification materials.

3. The method (200) of claim 1 or 2, wherein the target message is generated in response to the server determining that the reference information satisfies a preset condition, and the target identification material corresponds to the preset condition.

4. The method (200) of claim 1 or 2, wherein the target message indicates a theme and/or an identifier of the target identification material.

5. The method (200) of claim 1, wherein the target identification material comprises image identification content, and updating an image identification of the target application by using the target identification material comprises:
replacing the image identification of the target application with the image identification content.

6. The method (200) of claim 1, wherein the target identification material comprises image identification content, and updating the image identification of the target application with the target identification material comprises:
adjusting, based on the target identification material, a style of an existing icon identification of the target application, such that an updated icon identification presents the target identification material.

7. The method (200) of claim 1, wherein updating the image identification of the target application by using the target identification material comprises:
updating, in response to receiving a closing request of the target application and by using the target identification material, the image identification of the target application.

8. The method (200) of claim 1, wherein semantic information expressed by the target identification material is determined based on the reference information.

9. The method (200) of claim 1, wherein the reference information indicates content of benefits of the user in the target application, and the target identification material is associated with the content of benefits.

10. The method (200) of claim 1, wherein the update of the image identification of the target application is independent of a version update of the target application.

11. The method (200) of claim 1, wherein the image identification of the target application is a desktop icon of the target application.

12. An apparatus for application interaction, comprising:
an operation receiving module (410) configured to receive an operation of a user logging in a target application;
a material determination module (420) configured to determine a target identification material from a set of identification materials at a terminal device, the target identification material being determined based on reference information associated with the user; and
an identification update module (430) configured to update an image identification of the target application by using the target identification material.

13. An electronic device (130), comprising:
at least one processing unit (510); and
at least one memory coupled to the at least one processing unit (510) and storing instructions executable by the at least one processing unit (510), the instructions, when executed by the at least one processing unit (510), causing the electronic device (130) to perform the method of any of claims 1 to 11.

14. A computer-readable storage medium having a computer program (525) stored thereon, the computer program (525) being executable by a processor to perform the method (200) of any of claims 1 to 11.
